# EUROPEAN PATENT SPECIFICATION

(11) **EP 2 367 304 B1**
(45) Date of publication and mention of the grant of the patent: **03.04.2013**
(21) Application number: 11155858.1
(22) Date of filing: 24.02.2011
(51) Int. Cl.: H04B 10/2513

(54) **Method for restoring a connection**
Verfahren zur Wiederherstellung einer optischen Verbindung
Procédé de restauration d'une connexion optique

(30) Priority: 05.03.2010 FR 1000895
(43) Date of publication of application: 21.09.2011
(73) Proprietor: Alcatel Lucent, 75007 Paris (FR)
(72) Inventor: Zami, Thierry, 91620, NOZAY (FR); Bastide, Christian, 91620, NOZAY (FR)
(74) Representative: Sciaux, Edmond

(56) References cited:
- EP-A1- 1 710 934
- US-A- 5 757 846
- US-A1- 2006 078 336
- US-A1- 2007 071 447

## Description

The present invention concerns the field of optical communication networks and in particular the restoration of connections in the event of a failure on the optical paths taken by these connections.

In order to confront failures that may occur on established connections, the operators of optical communication networks need equipment to rapidly reestablish failed connections. Two solutions make it possible to overcome this problem, setting up protective connections and restoring connections.

Protective connections are very effective because they enable a nearly immediate reestablishment of the connection, but their cost is very high because transmission capacities must be doubled.

Restoration is less expensive because it consists of establishing a new connection having a different optical path in order to bypass the faulty link(s), but may lead to relatively long completion times, particularly due to the time needed to adapt the dispersion compensation adjustments to the new optical path.

Thus, in order to resolve the problem of accumulated dispersion effects along the connections' optical path, compensation modules are used within the optical receivers of the egress nodes. However, when restoring a connection, the new optical path may correspond to a very different accumulated dispersion within the egress node, which requires an adjustment of the parameters of the dispersion compensation module.

In the prior art, these modules are based on a thermal control, and scan a range of values in order to find the optimal adjustment. However, this scan may take several minutes, which is too long for operators whose acceptable time limit for restoration is about one minute.

In order to reduce this dispersion compensation adjustment time, the solutions of the prior art include both the use of receivers using coherent detection and the use of compensation fibers. Coherent detection makes it possible to quickly adapt to a signal having a different dispersion value, but requires expensive equipment such as a local oscillator (laser), photodiodes, or a signal processing module.

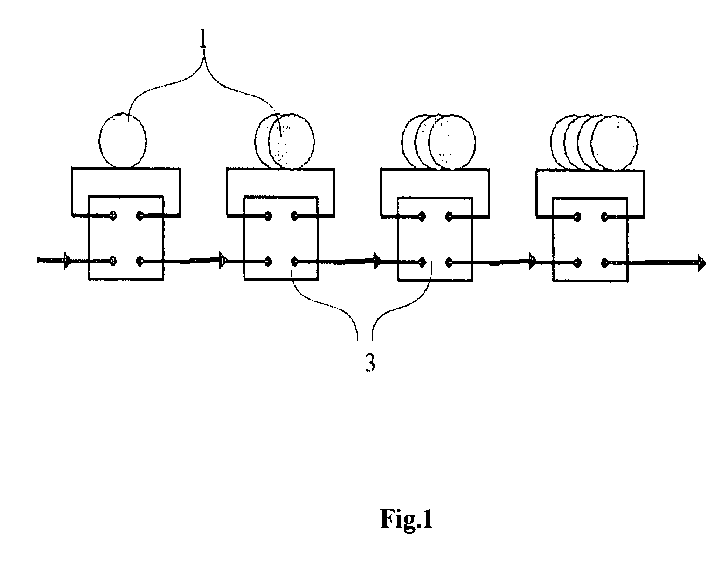

Figure 1 depicts one example embodiment of compensation fibers in which different compensation fibers 1 having different compensation values are combined, and in which the received signal is sent by means of optical switches 3 over fibers whose total dispersion compensates at least partially for the dispersion accumulated along the optical path taken by the connection within the optical network. Nonetheless, in order to be able to compensate for a broad range of dispersion values, a large number of fibers 1 is necessary, which corresponds to a large form factor and prevents their installation on cards used in optical networks.

Another prior art system can be found in EP 1 710 934.

The need is therefore to propose a method enabling a fast adaptation to a change in dispersion in the event of the restoration of a connection in which the equipment needed for the method is fairly compact, consumes little power, and has a low insertion loss so that they can be installed on cards in use, and whose overall cost on the network scale is lower than for protective solutions.

The present invention therefore pertains to a method for restoring an optical connection linking a source node to an egress node of an optical network, wherein a node comprises:
- a plurality of optical receivers based on a quadratic detection of the signal transmitted by a source node and equipped with adjustable modules for compensating for the dispersion effects which have accumulated on the connection's optical path between a source node and an egress node,
- switching means making it possible to send signals in which said node is the egress node towards at least one optical receiver of said node,
said egress node further comprising:
- at least one optical receiver based on a coherent detection of the signal transmitted by the connection capable of compensating for the dispersion effects accumulated along the connection's optical path and enabling a fast adaptation to a change in the value of the dispersion,
wherein, in the event of failures on a connection, said method comprises the following steps:
- determining a new optical path that makes it possible to restore the optical connection between the source node and the egress node,
- activating the connection corresponding to the determined new optical path,
- sending the signal transmitted by the connection corresponding to the determined new optical path to an optical receiver, based on a coherent detection of the signal transmitted by the connection,
- adjusting the compensation module associated with the receiver based on a quadratic detection of the connection that has experienced a failure in order to compensate for the scatter effects that have accumulated on the new optical path, once the adjustment is made,
- deleting the sending of the signal transmitted by the connection corresponding to the determined new optical path to an optical receiver, based on a coherent detection of the signal transmitted by the connection.

According to another embodiment of the present invention, whenever the signal transmitted by the connection which corresponds to the determined new optical path, is sent to an optical receiver based on a coherent detection of the signal transmitted by said connection, said signal is also sent to the optical receiver based on a quadratic detection to which it was sent before the failure of the connection in view of adjusting the associated compensation module.

According to an additional embodiment of the present invention, the node further comprises switching means making it possible to send a detected signal to an electrical output port, and, when adjusting the compensation module of the optical receiver based on a quadratic detection of the connection that has experienced a fault in order to compensate for the dispersion effects that have accumulated on the new optical path, the signal detected by the optical receiver based on a coherent detection is sent to the electrical output port, which corresponds to the connection on which the failure occurred.

According to an additional embodiment of the present invention, the adjustment of the compensation module associated with the receiver based on a quadratic detection of the connection that has experienced a failure in order to compensate for the dispersion effects that have accumulated on the new optical path is carried out based on the compensation adjustment of the dispersion associated with the receiver based on a coherent detection and used to restore said connection.

According to another embodiment of the present invention, the dispersion corresponds to chromatic dispersion.

According to an additional embodiment of the present invention, the dispersion corresponds to polarization mode dispersion.

According to an additional embodiment of the present invention, the adjustable modules for compensating for the dispersion effects are thermally-controlled compensation modules.

According to another embodiment of the present invention, the optical connection is a two-way connection, so that in the event of a failure on the connection, two restoration processes are established in parallel within the receivers of two end-nodes of the connection, and wherein the steps of:
- sending the signal transmitted by the connection corresponding to the determined new optical path to an optical receiver, based on a coherent detection of the signal transmitted by the connection, and
- deleting the sending of the signal transmitted by the connection corresponding to the determined new optical path to an optical receiver, based on a coherent detection,
are carried out in a synchronized matter on said end-nodes.

The present invention also pertains to a node of an optical communication network, comprising:
- a plurality of optical receivers based on a quadratic detection of the signal transmitted by a source node and equipped with adjustable modules for compensating for the dispersion effects which have accumulated on the connection's optical path between a source node and an egress node,
- switching means making it possible to send signals in which said node is the egress node towards at least one optical receiver of said node,
- at least one optical receiver based on a coherent detection capable of compensating for the dispersion effects accumulated along the connection's optical path and enabling a fast adaptation to a change in the value of the dispersion,
- means configured to:
   - detect a failure on one of the connections of which said node is the egress node,
   - send a signal transmitted by a connection corresponding to a determined new optical path to an optical receiver based on a coherent detection,
   - adjust the compensation modules associated with the quadratic-detection receivers,
   - eliminate the sending of the signal transmitted by the connection corresponding to a determined new optical path to an optical receiver based on a coherent detection once the adjustment of the compensation module associated with the quadratic-detection receiver has been carried out.

According to another embodiment of the present invention, said node further comprises a electrical output ports and switching means making it possible to send the detected signals to said electrical output ports, said switching means being configured to:
- send, when adjusting the compensation module associated with a quadratic-detection receiver, the signal detected by the optical receiver based on a coherent detection to the electrical output port which corresponds to the connection on which the failure occurred.

According to an additional embodiment of the present invention, the means configured to adjust the composition modules associated with the quadratic-detection receivers are configured to carry out their adjustment based on the adjustments of a coherent-detection receiver.

Other characteristics and benefits of the invention will become apparent from the following description, given with reference to the attached drawings, which by way of a non-limiting example depict one possible embodiment.

In these drawings:
- Figure 1 depicts a diagram of an example embodiment of a dispersion compensation module using compensation fibers;
- Figure 2 depicts a diagram of an optical network portion comprising a connection between two nodes;
- Figure 3 depicts a diagram of an example restoration of a faulty connection;
- Figure 4 depicts an optical node diagram;
- Figure 5 depicts a diagram of the switching of optical signals to the receivers, then from the receivers to the electronic outputs within a node;
- Figure 6 depicts an example of switching a connection within a node;
- Figure 7 depicts a synoptic diagram of the various steps according to one embodiment of the present invention;
- Figure 8 depicts an example of switching during the restoration of a connection;

In the following description, generally:

The term "source node" defines a node from which an optical connection is established. It is within the source node that the optical signal is created, generally by using an optical laser. In an optical communication network, in general, all the nodes may be and are source nodes.

The term "egress node" defines a node to which a signal of the connection established by a source node is addressed and within which it is converted, generally into an electrical signal. In an optical communication network, in general, all the nodes may be and are egress nodes.

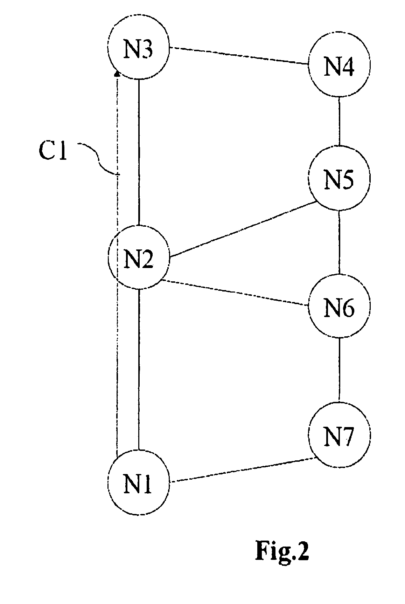

Figure 2 depicts an example of a transparent connection C1 between a node N1 and a node N3. On the optical path N1-N2-N3, the signal transmitted by this connection undergoes degradations, and particularly dispersion. These degradations accumulate along the optical path, such that depending on the characteristics of that optical path (length, characteristics of the fibers, etc.) the dispersion value within the egress node (N3 in this situation) varies. Thus, when activating the connection, a dispersion compensation module must be adjusted in order to compensate for the dispersion level of the signal received within the node N3.

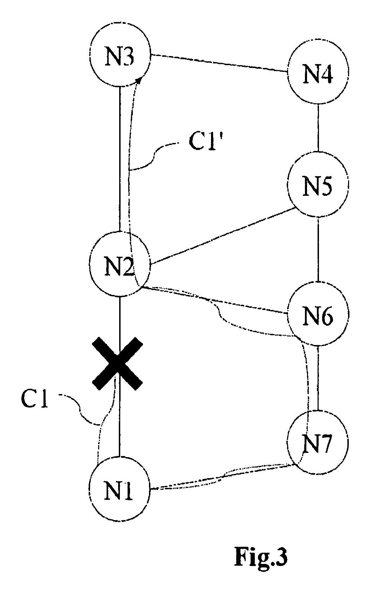

In the event of a failure on the connection C1 as depicted in Figure 3 within the link N 1-N2, a restoration process is put in place in order to determine a new optical path for ensuring the connection between the node N1 and the node N3. In the present situation, the new connection C1' corresponds to the optical path N1-N7-N6-N2-N3. However, as the optical path taken by C1' is different from the optical path taken by C1, the accumulated dispersion within the node N3 is different, which requires a new adjustment of that dispersion's compensation module. As described previously, this adjustment requires a non-negligible amount of time that is incompatible with the urgency implied by restoring a faulty connection. Thus, according to the embodiments of the present invention, a coherent-detection receiver 19 is used temporarily in the event that a faulty connection is being restored, so as to make it possible to reduce the time of adapting to the new dispersion value.

This means that replacing all of the quadratic-detection receivers 21 with coherent-detection receivers 19 would represent a major investment, as described previously. However, the installation of coherent-detection receivers in a limited number, because they are used only when a connection fails, represents a lesser investment.

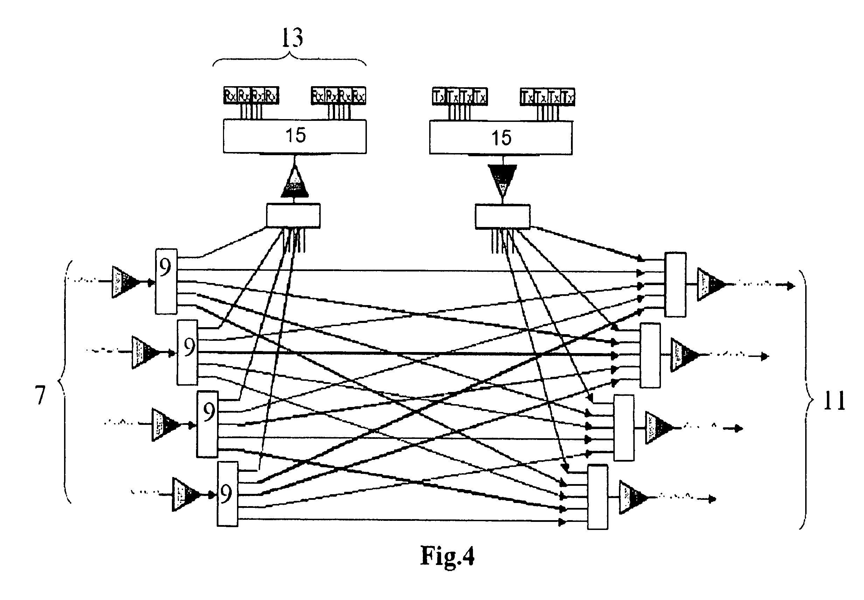

Figure 4 depicts an example embodiment of a node. A set of optical fibers is connected to the inputs 7 of the node. The signals transmitted by these optical fibers are then demultiplexed by demultiplexers 9. The signals for which the node is a transition are transparently routed to the outputs 11 of the node in order to be sent to appropriate optical fibers (in order to route them to their destination) while the signals for which the node is the egress node are routed to receivers 13 by way of switching means 15 corresponding to a diffusing switch. Thus, the diffusing switch 15 makes it possible to send a signal received on one given wavelength to either of the receivers 13 and also to several receivers 13 simultaneously.

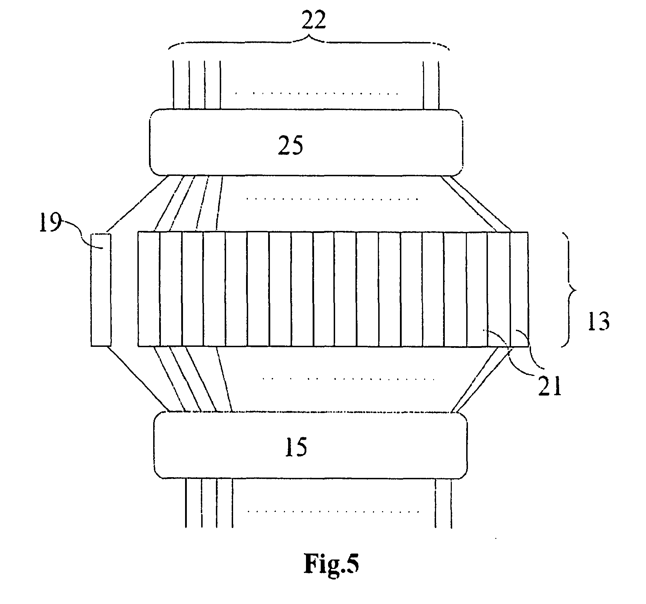

Thus, according to an embodiment of the present invention depicted in Figure 5, at least one of the receivers 13 is a receiver based on a coherent detection 19 (the other receivers being receivers based on a quadratic detection 21).

The diffusing switch 15 therefore makes it possible to send the received signals to the appropriate receivers 13, the signals being converted into electrical signals within the receivers and then sent to an electrical output port 22 of the node corresponding to their destination by way of electrical or electronic switches 25.

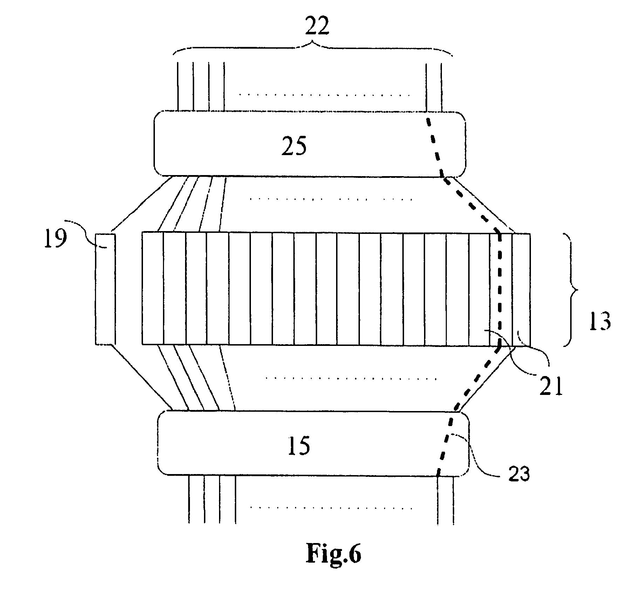

Figure 6 depicts an example of a received signal 23 corresponding to a certain connection C1. This signal 23 is sent to one of the quadratic-detection receivers 21 to be converted into an electrical signal, then is routed to its destination by switching means 25 corresponding to a switch. In the event of a failure on the connection C1 as depicted in Figure 3, a restoration process is begun and the signal 23 of the connection C1 is sent to the connection C1' (termed 23' in this case).

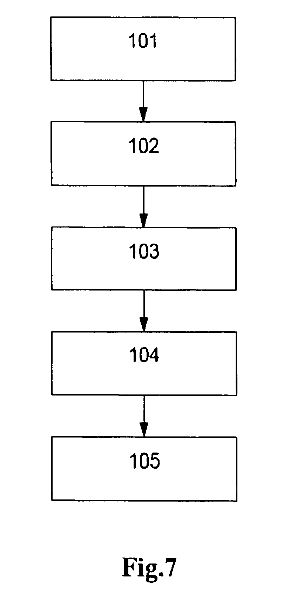

The various steps of the restoration method as described in Figure 7 will now be presented in greater detail.

The first step 101 considers the detection of a failure on one of the network's connections. This detection may be done by the connection's egress node, for example.

The second step 102 concerns the determination and activation of the restoration connection whose optical path makes it possible to bypass the link or the node on which the failure occurred, such as the connection C1' in Figure 3. The determination of a new optical path is generally carried out by the network's control plane, which then sends command signals to the various nodes involved in the connection in order to activate said connection.

As the accumulated dispersion value on the optical path corresponding to C1' is different from the accumulated dispersion value on C1, the signal 23' corresponding to the connection C1' is sent to a receiver based on a coherent detection 19 (step 103) in order to keep the signal from losing data during the adjustment of the dispersion compensation within the quadratic receiver 21 which previously corresponded to the connection C 1 (step 104).

This is because, as previously described, a coherent-detection receiver 19 makes it possible to quickly adapt to a change in the dispersion of the signals that it receives. Furthermore, this quick adaptation is verified for both chromatic dispersion and polarization mode dispersion. Thus, the embodiments of the present invention make it possible to quickly adapt to either a change in chromatic dispersion or a change in polarization mode dispersion.

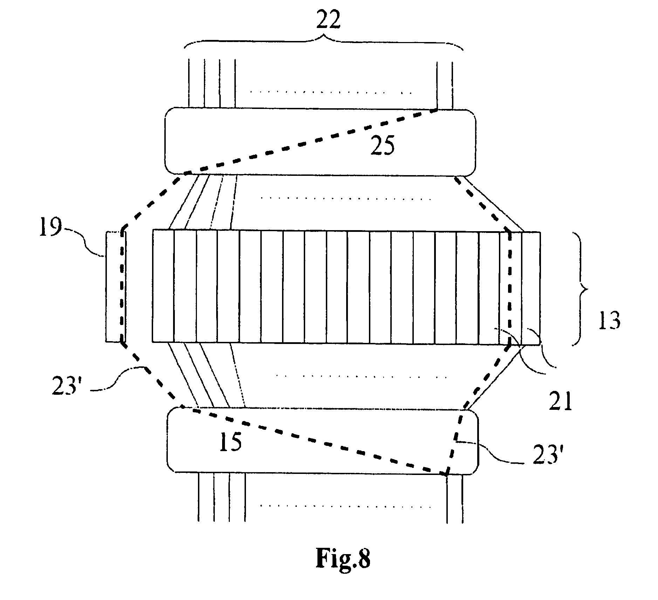

Additionally, it should be noted that after the failure, signal 23' transmitted by the connection C1' is sent both to a receiver based on a coherent detection 19 in order to be converted and processed and to the receiver based on a quadratic detection 21 in order to carry out the dispersion compensation adjustment as depicted in Figure 8.

Furthermore, the adjustment of the quadratic receiver's 21 compensation module may be done from the adjustment of the coherent-detection receiver 19. This is because the dispersion values detected within the coherent-detection receiver 19 may be used to adjust to the quadratic-detection receiver's 21 compensation module and thereby reduce the time needed for that adjustment.

As coherent detection enables a fast adaptation to the new dispersion value, the signal derived from the receiver based on a coherent detection 19, after the failure, quickly achieves a sufficient signal quality to enable normal functioning of the connection C1', which limits the signal loss subsequent to the failure. Thus, the signal transmitted by the switch 25 to the electrical output port 22 corresponding to the connection C1 (or C1') corresponds to the signal derived from the receiver based on a coherent detection 19, the signal derived from the quadratic-detection receiver being blocked by the switch 25 thereby making it possible to adjust the dispersion compensation module associated with the quadratic-detection receiver 21 previously corresponding to the connection C1. This adjustment is done from the signal received on the connection C1' (hence the need for the diffusing switch 15 to transmit the received signal 23' to the two receivers).

Once the adjustment has been carried out, the switch 25 may again transmit, to the electrical output port 22, the electrical signal coming from the quadratic-detection receiver 21 instead of transmitting a signal derived from the coherent-detection receiver 19 (step 105). The connection C1 is then restored by the path C1', all while keeping the same (quadratic-detection) receiver.

The received optical signal is no longer sent to the coherent-detection receiver 19 by the diffusing switch 15 (step 105) and the coherent-detection receiver 19 then goes into standby mode (meaning that no longer receives any signals) so that it can be available if a new failure occurs on one of the connections whose node is the egress node.

Thus, the use of diffusing switches 15 and electrical or electronic switches 25 and at least one coherent-detection receiver 19 makes it possible, in the event of a failure on a connection, to process the signal corresponding to the new optical path of the restored connection by the (at least one) coherent-detection receiver 19 in order to enable a fast adaptation to the change in the accumulated dispersion value due to the change in optical path, and thereby to reduce the interval of time between the moment of the failure and the moment when a connection is restored having a sufficient destination signal quality.

Additionally, since the coherent detection receiver's 19 are only used during failures on one of the connections whose node is the egress node, their number is reduced to the minimum, and may be adjusted based on the traffic crossing the node and/or based on the frequency of the failures observed within the node.

According to one embodiment of the present invention, the connection corresponds to a bidirectional connection, so that for a single connection, the extreme nodes of the connection are both the source nodes and the egress nodes of the connection. In such a configuration, during a failure within the connection, two restoration processes (one at each end-node) as described above are initiated. However, in the case of bidirectional connections, for technical reasons, the transmitters and receivers of the connection's signals are located on shared card within the node. Thus, when setting up a restoration process subsequent to a failure, switching to a coherent-detection detector 19 (corresponding to the configuration of Figure 8), and then when the adjustment of the compensation module from the quadratic-detection receiver 21 is carried out, eliminating the switch to the coherent-detection receiver 19 (returning to the configuration of Figure 6) must be carried out in synchronization on the two end-nodes to enable good working order. The elimination of the switch to the coherent-detection receiver 19 is therefore only carried out when the adjustment of both receivers' compensation modules (one at each end-node) are performed.

The embodiments of the present invention therefore make it possible, at a limited cost, to propose a solution making it possible to reduce the time needed for the egress node to reestablish detection of the signals exhibiting a satisfactory quality after a failure occurs on one of the connections in which it is the egress node, and therefore offers a new alternative to operators of optical communication networks in order to improve the effectiveness and output of their network.

## Claims

1. A method for restoring an optical connection linking a source node to an egress node of an optical network, wherein a node comprises:
- a plurality of optical receivers based on a quadratic detection (13) of the signal transmitted by a source node and equipped with adjustable modules for compensating for the dispersion effects which have accumulated on the connection's optical path between a source node and an egress node,
- switching means (15) making it possible to send signals in which said node is the egress node towards at least one optical receiver of said node, said egress node further comprising:
said egress node further comprising:
- at least one optical receiver based on a coherent detection (19) of the signal transmitted by the connection capable of compensating for the dispersion effects accumulated along the connection's optical path and enabling a fast adaptation to a change in the value of the dispersion,
wherein, in the event of failures on a connection, said method comprises the following steps:
- determining a new optical path that makes it possible to restore the optical connection between the source node and the egress node (102),
- activating the connection corresponding to the determined new optical path (102),
- sending the signal transmitted by the connection corresponding to the determined new optical path to an optical receiver, based on a coherent detection (19) of the signal transmitted by the connection (103), and
- adjusting the compensation module associated with the receiver based on a quadratic detection (13) of the connection that has experienced a failure in order to compensate for the scatter effects that have accumulated on the new optical path (104),
once the adjustment is made,
- eliminating the sending of the signal transmitted by the connection corresponding to the determined new optical path to an optical receiver, based on a coherent detection (19) of the signal transmitted by the connection (105).

2. A restoration method according to claim 1, wherein whenever the signal transmitted by the connection which corresponds to the determined new optical path, is sent to an optical receiver based on a coherent detection (19) of the signal transmitted by said connection, said signal is also sent to the optical receiver based on a quadratic detection (13) to which it was sent before the failure of the connection in view of adjusting the associated compensation module.

3. A restoration method according to claim 1 or 2, wherein the node further comprises switching means making it possible to send a detected signal to an electrical output port (22), and, when adjusting the compensation module of the optical receiver based on a quadratic detection (13) of the connection that has experienced a fault in order to compensate for the dispersion effects that have accumulated on the new optical path (104), the signal detected by the optical receiver based on a coherent detection (19) is sent to the electrical output port (22), which corresponds to the connection on which the failure occurred.

4. A restoration method according to one of the preceding claims, wherein the adjustment of the compensation module associated with the receiver based on a quadratic detection (13) of the connection that has experienced a failure in order to compensate for the dispersion effects that have accumulated on the new optical path (104) is carried out based on the compensation adjustment of the dispersion associated with the receiver based on a coherent detection (19) and used to restore said connection.

5. A restoration method according to one of the preceding claims, wherein the dispersion corresponds to chromatic dispersion.

6. A restoration method according to one of the preceding claims, wherein the dispersion corresponds to polarization mode dispersion.

7. A restoration method according to one of the preceding claims, wherein the adjustable modules for compensating for the dispersion effects are thermally-controlled compensation modules.

8. A restoration method according to one of the preceding claims, wherein the optical connection is a two-way connection, so that in the event of a failure on the connection, two restoration processes are established in parallel within the receivers of two end-nodes of the connection, and wherein the steps of:
- sending the signal transmitted by the connection corresponding to the determined new optical path to an optical receiver, based on a coherent detection (19) of the signal transmitted by the connection (103), and
- eliminating the sending of the signal transmitted by the connection corresponding to the determined new optical path to an optical receiver, based on a coherent detection (19) (105),
are carried out in a synchronized matter on said end-nodes.

9. A node of an optical communication network, comprising:
- a plurality of optical receivers based on a quadratic detection (13) of the signal transmitted by a source node and equipped with adjustable modules for compensating for the dispersion effects which have accumulated on the connection's optical path between a source node and an egress node,
- switching means (15) making it possible to send signals in which said node is the egress node towards at least one optical receiver of said node, said egress node further comprising:
- at least one optical receiver based on a coherent detection (19) capable of compensating for the dispersion effects accumulated along the connection's optical path and enabling a fast adaptation to a change in the value of the dispersion,
- means configured to:
- detect a failure on one of the connections of which said node is the egress node,
- send a signal transmitted by a connection corresponding to a determined new optical path to an optical receiver based on a coherent detection (19).
- adjust the compensation modules associated with the quadratic-detection receivers (13),
- eliminate the sending of the signal transmitted by the connection corresponding to a determined new optical path to an optical receiver based on a coherent detection (19) once the adjustment of the compensation module associated with the quadratic-detection receiver (13) has been carried out.

10. A node of an optical communication network according to claim 9, further comprising electrical output ports (22) and switching means (25) making it possible to send the detected signals to said electrical output ports (22), said switching means (25) being configured to:
- send, when adjusting the compensation module associated with a quadratic-detection (13) receiver, the signal detected by the optical receiver based on a coherent detection (19) to the electrical output port which corresponds to the connection on which the failure occurred.

11. A node of an optical communication network according to claim 9 or 10 wherein the means configured to adjust compensation modules associated with the quadratic-detection (13) receivers are configured to carry out their adjustment based on the adjustments of a coherent-detection receiver (19).

## Patentansprüche

1. Verfahren zur Wiederherstellung einer optischen Verbindung, welche einen Quellknoten mit einem Ausgangsknoten eines optischen Netzwerks verbindet, wobei ein Knoten umfasst:
- Eine Vielzahl von optischen Empfängern, welche auf einer quadratischen Erfassung (13) des von einem Quellknoten übertragenen Signals basieren und mit einstellbaren Modulen zum Kompensieren der Dispersionseffekte, die sich auf dem optischen Pfad der Verbindung zwischen einem Quellknoten und einem Ausgangsknoten angehäuft haben, ausgestattet sind,
- Schaltmittel (15), die es ermöglichen, Signale zu senden, wobei der besagte Knoten der Ausgangsknoten zu mindestens einem optischen Empfänger des besagten Knotens ist, wobei der besagte Ausgangsknoten weiterhin umfasst:
- Mindestens einen optischen Empfänger, welcher auf einer kohärenten Erfassung (19) des von der Verbindung übertragenen Signals basiert und fähig ist, Dispersionseffekte, die sich auf dem optischen Pfad der Verbindung angehäuft haben, zu kompensieren und eine schnelle Anpassung an eine Änderung des Dispersionswertes ermöglicht,
wobei das besagte Verfahren im Fall von Fehlern auf einer Verbindung die folgenden Schritte umfasst:
- Bestimmen eines neuen optischen Pfads, welcher die Wiederherstellung der optischen Verbindung zwischen dem Quellknoten und dem Ausgangsknoten ermöglicht (102),
- Aktivieren der dem bestimmten neuen optischen Pfad entsprechenden Verbindung (102),
- Senden des von der Verbindung, welche dem bestimmten neuen optischen Pfad entspricht, übertragenen Signals an einen optischen Empfänger, welcher auf einer kohärenten Erfassung (19) des von der Verbindung übertragenen Signals (103) basiert, und
- Einstellen des mit dem Empfänger, welcher auf einer quadratischen Erfassung (13) der Verbindung, auf der ein Fehler aufgetreten ist, basiert, assoziierten Kompensationsmoduls, um Streueffekte, die sich auf dem neuen optischen Pfad angehäuft haben, zu kompensieren (104),
sobald die Anpassung erfolgt ist,
- Eliminieren des Sendens des von der Verbindung, welche dem bestimmten neuen optischen Pfad entspricht, übertragenen Signals an einen optischen Empfänger, welcher auf einer kohärenten Erfassung (19) des von der Verbindung übertragenen Signals (105) basiert.

2. Wiederherstellungsverfahren nach Anspruch 1, wobei jedes Mal, wenn das von der Verbindung, welche dem bestimmten neuen optischen Pfad entspricht, übertragene Signal an einen optischen Empfänger, welcher auf einer kohärenten Erfassung (19) des von der besagten Verbindung übertragenen Signals basiert, gesendet wird, das besagte Signal ebenfalls an den auf einer quadratischen Erfassung (13) basierten optischen Empfänger, an welchen es vor Auftreten des Fehlers auf der Verbindung gesendet wurde, gesendet wird, um das assoziierte Kompensationsmodul einzustellen.

3. Wiederherstellungsverfahren nach Anspruch 1 oder 2, wobei der Knoten weiterhin Schaltmittel umfasst, welche es ermöglichen, ein erfasstes Signal an einen elektrischen Ausgangsport (22) zu senden und wobei, wenn das Kompensationsmodul des optischen Empfängers, welcher auf einer quadratischen Erfassung (13) der Verbindung, auf welcher ein Fehler aufgetreten ist, basiert, eingestellt wird, um die Dispersionseffekte, die sich auf dem neuen optischen Pfad angehäuft haben, zu kompensieren (104), das von dem auf einer kohärenten Erfassung (19) basierten optischen Empfänger erfasste Signal an den elektrischen Ausgangsport (22), welcher der Verbindung, auf der der Fehler aufgetreten ist, entspricht, gesendet wird.

4. Wiederherstellungsverfahren nach einem der vorstehenden Ansprüche, wobei die Einstellung des mit dem Empfänger, welcher auf einer quadratischen Erfassung (13) der Verbindung, auf welcher ein Fehler aufgetreten ist, basiert, assoziierten Kompensationsmoduls, um die Dispersionseffekte, die sich auf dem neuen optischen Pfad angehäuft haben (104), zu kompensieren, auf der Basis der Einstellung der Kompensation der mit dem auf einer kohärenten Erfassung (19) basierten Empfängers durchgeführt und für die Wiederherstellung der besagten Verbindung verwendet wird.

5. Wiederherstellungsverfahren nach einem der vorstehenden Ansprüche, wobei die Dispersion einer chromatischen Dispersion entspricht.

6. Wiederherstellungsverfahren nach einem der vorstehenden Ansprüche, wobei die Dispersion einer Polarisationsmodendispersion entspricht.

7. Wiederherstellungsverfahren nach einem der vorstehenden Ansprüche, wobei die einstellbaren Module zum Kompensieren der Dispersionseffekte thermisch gesteuerte Kompensationsmodule sind.

8. Wiederherstellungsverfahren nach einem der vorstehenden Ansprüche, wobei die optische Verbindung eine Zwei-Wege-Verbindung ist, so dass im Fall eines Fehlers der Verbindung zwei Wiederherstellungsverfahren parallel innerhalb der Empfänger von zwei Endknoten der Verbindung eingeleitet werden, und wobei die Schritte des
- Sendens des von der dem bestimmten neuen optischen Pfad entsprechenden Verbindung übertragenen Signals an einen optischen Empfänger, basierend auf einer kohärenten Erfassung (19) des von der Verbindung übertragenen Signals (103), und
- Eliminierens des Sendens des von der Verbindung, welche dem bestimmten neuen optischen Pfad entspricht, übertragenen Signals an einen auf einer kohärenten Erfassung (19) basierten optischen Empfänger (105),
synchronisiert an den besagten Endknoten durchgeführt werden.

9. Knoten eines optischen Kommunikationsnetzwerks, umfassend:
- Eine Vielzahl von optischen Empfängern, welche auf einer quadratischen Erfassung (13) des von einem Quellknoten übertragenen Signals basieren und mit einstellbaren Modulen zum Kompensieren der Dispersionseffekte, die sich auf dem optischen Pfad der Verbindung zwischen einem Quellknoten und einem Ausgangsknoten angehäuft haben, ausgestattet sind,
- Schaltmittel (15), welche es ermöglichen, Signale zu versenden, wobei der besagte Knoten der Ausgangsknoten zu mindestens einem optischen Empfänger des besagten Knotens ist, wobei der besagte Ausgangsknoten weiterhin umfasst:
- mindestens einen auf einer kohärenten Erfassung basierten optischen Empfänger (19), welcher fähig ist, die sich auf dem optischen Pfad der Verbindung angehäuften Dispersionseffekte zu kompensieren und ein schnelles Anpassen an eine Änderung des Dispersionswertes zu ermöglichen,
- Mittel, die konfiguriert sind, um:
- einen Fehler auf einer der Verbindungen, deren besagter Knoten der Ausgangsknoten ist, zu erkennen,
- ein von einer Verbindung, welche einem bestimmten neuen optischen Pfad entspricht, übertragenes Signal an einen auf einer kohärenten Erfassung basierten optischen Empfänger (19) zu senden,
- die mit den auf einer quadratischen Erfassung basierten Empfängern (13) assoziierten Kompensationsmodule einzustellen,
- das Senden des von der Verbindung, welche einem bestimmten neuen optischen Pfad entspricht, übertragenen Signals an einen auf einer kohärenten Erfassung basierten optischen Empfänger (19) zu eliminieren, sobald die Einstellung des mit dem auf der quadratischen Erfassung basierten Empfänger (13) assoziierten Kompensationsmoduls erfolgt ist.

10. Knoten eines optischen Kommunikationsnetzwerks nach Anspruch 9, weiterhin umfassend elektrische Ausgangsports (22) und Schaltmittel (25), die es ermöglichen, die erfassten Signale an die besagten elektrischen Ausgangsports (22) zu senden, wobei die besagten Schaltmittel dazu ausgelegt sind,
- bei der Einstellung des mit einem auf der quadratischen Erfassung (13) basierten Empfänger assoziierte Kompensationsmodul das von dem auf der kohärenten Erfassung (19) basierten optischen Empfänger erfasste Signal an den elektrischen Ausgangsport, welcher der Verbindung, auf der der Fehler aufgetreten ist, entspricht, zu senden.

11. Knoten eines optischen Kommunikationsnetzwerks nach Anspruch 9 oder 10, wobei die Mittel, die für das Einstellen der mit den auf der quadratischen Erfassung (13) basierten Empfänger assoziierten Kompensationsmodule konfiguriert sind, für das Durchführen ihrer Einstellung auf der Basis der Einstellungen eines auf der kohärenten Erfassung basierten Empfängers (19) konfiguriert sind.

## Revendications

1. Procédé pour restaurer une connexion optique reliant un noeud source à un noeud de sortie d'un réseau optique, un noeud comprenant :
- une pluralité de récepteurs optiques basés sur une détection quadratique (13) du signal émis par un noeud source et équipés de modules réglables pour compenser les effets de dispersion qui se sont accumulés sur le chemin optique de connexion entre un noeud source et un noeud de sortie,
- des moyens de commutation (15) qui permettent l'envoi de signaux, dans lesquels ledit noeud est le noeud de sortie, vers au moins un récepteur optique dudit noeud, ledit noeud de sortie comprenant en outre :
- au moins un récepteur optique basé sur une détection cohérente (19) du signal émis par la connexion capable de compenser les effets de dispersion qui se sont accumulés le long du chemin optique de connexion et permettant une adaptation rapide à une modification de la valeur de la dispersion,
procédé selon lequel, dans le cas de défaillances sur une connexion, ledit procédé comprend les étapes suivantes :
- détermination d'un nouveau chemin optique qui permet de restaurer la connexion optique entre le noeud source et le noeud de sortie (102),
- activation de la connexion correspondant au nouveau chemin optique (102) déterminé,
- envoi du signal émis par la connexion correspondant au nouveau chemin optique déterminé à un récepteur optique basée sur une détection cohérente (19) du signal émis par la connexion (103), et
- réglage du module de compensation associé au récepteur basé sur une détection quadratique (13) de la connexion qui a rencontré une défaillance afin de compenser les effets de dispersion qui se sont accumulés sur le nouveau chemin optique (104), une fois le réglage effectué,
- élimination de l'envoi du signal émis par la connexion correspondant au nouveau chemin optique déterminé à un récepteur optique basé sur une détection cohérente (19) du signal émis par la connexion (105).

2. Procédé de restauration selon la revendication 1, selon lequel dès que le signal émis par la connexion qui correspond au nouveau chemin optique déterminé est envoyé à un récepteur optique basé sur une détection cohérente (19) du signal émis par ladite connexion, ledit signal est également envoyé au récepteur optique basé sur une détection quadratique (13) vers lequel il était envoyé avant la défaillance de la connexion en vue de régler le module de compensation associé.

3. Procédé de restauration selon la revendication 1 ou 2, selon lequel le noeud comprend en outre des moyens qui permettent d'envoyer un signal détecté vers un port de sortie électrique (22) et, lors du réglage du module de compensation du récepteur optique basé sur une détection quadratique (13) de la connexion qui a rencontré une défaillance en vue de compenser les effets de dispersion qui se sont accumulés sur le nouveau chemin optique (104), le signal détecté par le récepteur optique basé sur une détection cohérente (19) est envoyé au port de sortie électrique (22), ce qui correspond à la connexion sur laquelle s'est produite la défaillance.

4. Procédé de restauration selon l'une des revendications précédentes, selon lequel le réglage du module de compensation associé au récepteur basé sur une détection quadratique (13) de la connexion qui a rencontré une défaillance en vue de compenser les effets de dispersion qui se sont accumulés sur le nouveau chemin optique (104) est effectué en se basant sur le réglage de la compensation associée avec le récepteur basé sur une détection cohérente (19) et utilisé pour restaurer ladite connexion.

5. Procédé de restauration selon l'une quelconque des revendications précédentes, selon lequel la dispersion correspond à une dispersion chromatique.

6. Procédé de restauration selon l'une quelconque des revendications précédentes, selon lequel la dispersion correspond à une dispersion du mode de polarisation.

7. Procédé de restauration selon l'une quelconque des revendications précédentes, selon lequel les modules réglables pour compenser les effets de la dispersion sont des modules de compensation à régulation thermique.

8. Procédé de restauration selon l'une quelconque des revendications précédentes, selon lequel la connexion optique est une connexion bidirectionnelle de sorte qu'en cas de défaillance de la connexion, deux processus de restauration sont établis en parallèle au sein des récepteurs de deux noeuds d'extrémité de la connexion, avec selon lequel les étapes suivantes :
- envoi du signal émis par la connexion correspondant au nouveau chemin optique déterminé à un récepteur optique basée sur une détection cohérente (19) du signal émis par la connexion (103), et
- élimination de l'envoi du signal émis par la connexion correspondant au nouveau chemin optique déterminé à un récepteur optique basé sur une détection cohérente (19) (105),
sont exécutées d'une manière synchronisée sur lesdits noeuds d'extrémité.

9. Noeud d'un réseau de communication optique, comprenant :
- une pluralité de récepteurs optiques basés sur une détection quadratique (13) du signal émis par un noeud source et équipés de modules réglables pour compenser les effets de dispersion qui se sont accumulés sur le chemin optique de connexion entre un noeuds source et un noeud de sortie,
- des moyens de commutation (15) qui permettent l'envoi de signaux, dans lesquels ledit noeud est le noeud de sortie, vers au moins un récepteur optique dudit noeud, ledit noeud de sortie comprenant en outre :
- au moins un récepteur optique basé sur une détection cohérente (19) capable de compenser les effets de dispersion qui se sont accumulés le long du chemin optique de la connexion et permettant une adaptation rapide à une modification de la valeur de la dispersion,
- des moyens configurés pour :
- détecter une défaillance de l'une des connexions dont ledit noeud est le noeud de sortie,
- envoyer un signal émis par une connexion correspondant à un nouveau chemin optique déterminé à un récepteur optique basé sur une détection cohérente (19),
- régler les modules de compensation associés avec les récepteurs à détection quadratique (13),
- éliminer l'envoi du signal émis par la connexion correspondant à un nouveau chemin optique déterminé à un récepteur optique basé sur une détection cohérente (19) une fois que le réglage du module de compensation associé avec le récepteur à détection quadratique (13) a été effectué.

10. Noeud d'un réseau de communication optique selon la revendication 9, comprenant en outre des ports de sortie électriques (22) et des moyens de commutation (25) qui permettent d'envoyer les signaux détectés auxdits ports de sortie électriques (22), lesdits moyens de commutation (25) étant configurés pour :
- envoyer, lors du réglage du module de compensation associé avec un récepteur à détection quadratique (13), le signal reçu par le récepteur optique basé sur une détection cohérente (19) au port de sortie électrique qui correspond à la connexion sur laquelle a eu lieu la défaillance.

11. Noeud d'un réseau de communication optique selon la revendication 9 ou 10, avec lequel les moyens configurés pour régler les modules de compensation associés avec les récepteurs à détection quadratique (13) sont configurés pour effectuer leur réglage en se basant sur les réglages d'un récepteur à détection cohérente (19).
